Europäisches Patentamt

European Patent Office

Office européen des brevets

(11) Publication number: **0 485 980 A2**

# EUROPEAN PATENT APPLICATION

(21) Application number: **91119343.1**

(22) Date of filing: **13.11.91**

(51) Int. Cl.5: **H04M 3/50**, H04M 3/54

(30) Priority: **13.11.90 JP 304020/90**

(43) Date of publication of application:
**20.05.92 Bulletin 92/21**

(84) Designated Contracting States:
**DE FR GB**

(71) Applicant: **FUJITSU LIMITED**
**1015, Kamikodanaka Nakahara-ku**
**Kawasaki-shi Kanagawa 211(JP)**

(72) Inventor: **Keiko, Othsuki, c/o Fujitsu Limited**
**1015, Kamikodanaka, Nakahara-ku**
**Kawasaki-shi, Kanagawa 211(JP)**

(74) Representative: **Lehn, Werner, Dipl.-Ing. et al**
**Hoffmann, Eitle & Partner Patentanwälte**
**Arabellastrasse 4**
**W-8000 München 81(DE)**

(54) **Message service control system.**

(57) A message service control system having a main exchange unit and a voice storing exchange unit (13), the voice storing exchange unit (13) having a subscriber data registering unit (S3) for registering a transfer destination address designated in advance by a called subscriber and a message storing unit (S4) for storing the message, the message including a guideline to the calling subscriber for selecting to store a message from the calling subscriber or to be connected to the transfer destination address.

*Fig. 5*

## BACKGROUND OF THE INVENTION

### 1. Field of the Invention

The present invention relates to a message service control system for switching a call to a subscriber who has registered a message service request to a transfer destination.

In a message service, which connects a call to a voice storing exchange apparatus to store the message from the calling subscriber when a call receiving subscriber is absent, and reproduces and transfers the stored message in response to a request from the call receiving subscriber, if the message is not sufficient and the matter is relatively urgent, the calling subscriber must make a call to the destination to which the call receiving subscriber has moved, and there is a need for a simplification of such a sequence of operations.

### 2. Description of the Related Art

Conventionally, the message service is performed to connect the call to a subscriber who registered the message service request to the voice storing exchange apparatus for storing messages, but, when the calling subscriber wishes to talk directly with the called subscriber or it is sufficient to talk with a representative or colleague in the company, the calling subscriber must hang up and re-dial a number different from that of the called subscriber, and therefore, an extra calling operation after a connection is established by the voice storing exchange apparatus is required, which lowers the service efficiency.

## SUMMARY OF THE INVENTION

An object of the present invention is to make it possible, when the service by the message service only is insufficient, to transfer the call to a subscriber who registered the message service request, or to a representative thereof.

To attain the above object, there is provided, according to the present invention, a message service control system having a main exchange unit for connecting a calling subscriber terminal to a called subscriber terminal and a voice storing exchange unit for storing a message from the called subscriber, to thereby provide a service to the calling subscriber. The voice storing exchange unit includes a subscriber data registering unit for registering a transfer destination address designated in advance by the called subscriber and a message storing unit for storing the message. The message includes a guideline for the calling subscriber to select to store a message from the calling subscriber or to connect to the transfer destination address. The main exchange unit connects the data registering unit to the calling subscriber terminal when the calling subscriber calls the called subscriber. In response to the information selected by the calling subscriber with reference to the guideline, the voice storing exchange unit stores a message from the calling subscriber or the main exchange unit connects the calling subscriber terminal to the transfer destination.

According to an aspect of the present invention, when the calling subscriber calls the called subscriber, the main exchange unit connects, in response to a request provided in advance by the called subscriber, the calling subscriber terminal to the voice storing exchange unit, and in response to the information selected by the calling subscriber in response to the guideline, the voice storing exchange unit stores a message from the calling subscriber or sends the transfer destination address to the main exchange unit. The main exchange unit then performs a switching operation, when the transfer destination address is sent from the voice storing exchange unit, to connect the calling subscriber terminal to the transfer destination designated by the called subscriber.

According to another aspect of the present invention, the voice storing exchange unit comprises a subscriber data registering unit for registering the guideline. The guideline includes the transfer destination and a specific subscriber designated in advanced by the called subscriber, and the main exchange unit connects the calling subscriber terminal to the designated transfer destination only when the calling subscriber is the registered specific subscriber.

According to still another aspect of the present invention, the guideline includes the transfer destination and a specific date and time designated in advance by the called subscriber, and the main exchange unit connects the calling subscriber to the designated transfer destination only when the calling subscriber calls at a specific date and time.

According to still another aspect of the present invention, the guideline includes the transfer destination, a specific subscriber and a specific date and time designated in advance by the called subscriber, and the main exchange unit connects the calling subscriber terminal to the designated transfer destination only when the calling subscriber is the designated specific subscriber and calls at the specific date and time.

According to still another aspect of the present invention, the main exchange unit comprises a connecting unit for connecting the calling subscriber terminal to the voice storing exchange unit in response to a request from the called subscriber.

According to still another aspect of the present invention, there is provided a message service control method for providing a service to a calling subscriber, comprising the steps of: storing a guideline message requiring a request for selecting one of a plurality of services registered by a called subscriber; sending the message to the calling subscriber when receiving a call to the called subscriber; storing a message of the calling subscriber when receiving a first request from the calling subscriber in response to the guideline; and, connecting the calling subscriber to a transfer address when receiving a second request from the calling subscriber in response to the guideline.

By the above constitution of the present invention, a call connected to the voice storing exchange unit can be transferred to the transfer destination of the called subscriber in response to a request from the calling subscriber. Namely, the calling subscriber need not redial the transfer destination but merely request a transfer of the call, and the call is then automatically transferred to the transfer destination.

BRIEF DESCRIPTION OF THE DRAWINGS

The above object and features of the present invention will be more apparent from the following description of the preferred embodiments with reference to the drawings, wherein:

Figure 1 is a block diagram of a conventional message service control system;

Fig. 2 is a diagram of a message control system explaining the principle of the present invention;

Fig. 3 is a diagram of a message control system according to an embodiment of the present invention;

Fig. 4 is a general flowchart explaining the operation of the system shown in Fig. 3;

Fig. 5 is a block diagram showing the constitution of the voice storing exchange unit according to an embodiment of the present invention;

Fig. 6 is a flowchart explaining the service request registering operation in the central control unit, according to an embodiment of the present invention;

Fig. 7 is a flowchart explaining the guideline storing operation in the voice storing exchange unit, according to an embodiment of the present invention;

Fig. 8 is a flowchart explaining the transferr operation in the central control unit, according to an embodiment of the present invention; and

Fig. 9 is a flowchart explaining the operation in the voice storing exchange unit, according to an embodiment of the present invention.

DESCRIPTION OF THE PREFERRED EMBODIMENT

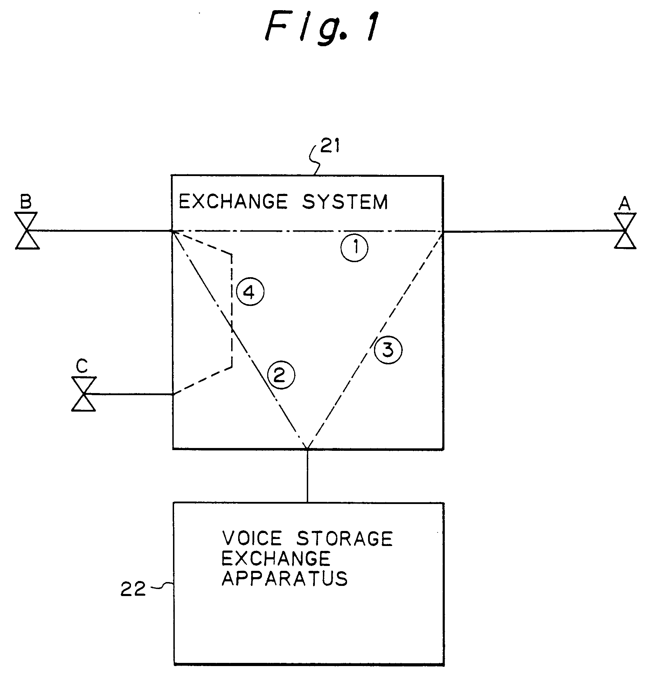

For better understanding of the present invention, a conventional art is first described with reference to Fig. 1.

In Fig. 1, in the conventional message service system, an exchange system 21 is connected to a voice storing exchange unit 22, and when a subscriber B makes a call to a subscriber A, the exchange system 21 makes a call to the subscriber A to establish a path (P1). When the subscriber A has registered for a message service demand, the exchange system establishes a path (P2) while connecting a call to the subscriber A to the voice storing exchange system 22. The subscriber B leaves a message in accordance with a message from the voice storing exchange apparatus 22, and this message from the subscriber B is stored in the voice storing exchange unit.

The content of the message stored in the voice storing exchange apparatus 22 is reproduced and transferred by the exchange system which establishes a path (P3) connected to the voice storing exchange unit 22, in response to a specific number from the subscriber A.

On the other hand, when the subscriber B washes to talk directly with the subscriber A who is away from the terminal or when it is sufficient to talk with a representative of the subscriber A, a call must be again made to the destination where the subscriber A has moved or to the representative. For example, when call is again made to a subscriber C to which the subscriber A has moved, the exchange system 21 makes a call to the subscriber C to establish a path (P4) by which the subscribers B and C can communicate.

As set forth above, the message service is performed to connect the call to the registered subscriber A for the message service demand to the voice storing exchange unit for storing messages, but, when the calling subscriber wishes to talk directly with the subscriber A or it is sufficient to talk with a representative or colleague in the company, the calling subscriber must hang up and re-dial to a number different from that of the subscriber A, and therefore, an extra calling operation after a connection is established by the voice storing exchange unit is required, which lowers the service efficiency.

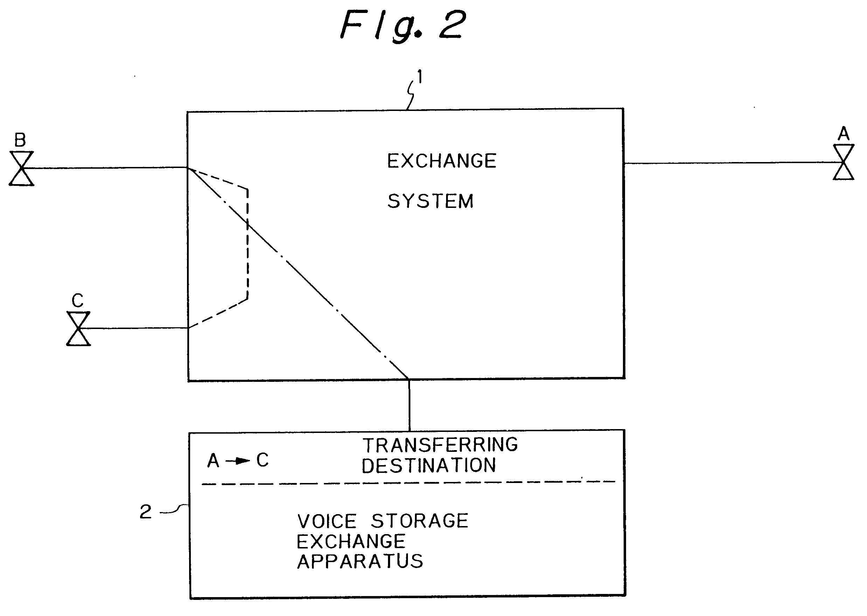

A message service control system, according to the present invention, enables a switching of a connection with simple operation without re-dialing even when a call is connected to a voice storing exchange unit, as will be discussed with reference to Fig. 2 which explains the principle of the present invention.

In Fig. 2, an exchange system (main exchange unit) 1 connects a call, calling a subscriber who registered a message service request to a voice storing exchange unit 2. In response to selected information from the calling subscriber with reference to the message from the voice storing exchange unit 2, the voice storing exchange unit 2 stores a message from the calling subscriber B as in the conventional art or operates to transfer the call from the calling subscriber B to a transfer destination designated by the called subscriber A.

The subscriber A registers in advance a transfer destination in conjunction with a register of a message service request.

It is also possible that the registered subscriber A may register in advance not only transfer destination but also a specific subscriber or specific date and time in conjunction with a register of the message service request. In this case, the exchange system 1 connects the call calling the registered subscriber A to the voice storing exchange unit 2, and switches to the registered destination only when the calling subscriber is the registered specific subscriber or when the call is made at the specific date and time.

In operation, after the subscriber A registers for a message service request, if the subscriber B makes a call to the subscriber A, the exchange system 1 searched for subscriber information to identify the registered subscriber A and thus establish a path as indicated by a chain line to the voice storing exchange unit 2. The voice storing exchange unit 2 then sends a message registered in the voice storing exchange unit 2 to the calling subscriber B. The message includes a notice for recording a message to the subscriber A, if any, and an instruction for entering the transfer destination which is, for example, a subscriber terminal C, or transfer number. Note that the transfer destination or the transfer number is not as long as the dial number of the destination but may be as short as one or two digits. Accordingly, when the subscriber B designates the subscriber terminal C by selecting the one or two digits, for example, the exchange system 1 switches the connection from the path illustrated by the chain line to the path illustrated by the broken line, to establish a connection with the subscriber terminal C.

When the registered subscriber A registers the subscriber C as a transfer destination, and when the calling subscriber B enters the transfer request number in accordance with the message from the subscriber A and stored in the voice storing exchange unit 2, the exchange system 1 switches the connection from the chain line path to the broken line path.

When the registered subscriber A registers a transfer destination and a specific subscriber or specific date and time, such as Sunday, etc., and when the subscriber B makes a call to the registered subscriber A and requests a transfer by entering the transfer request number according to the message stored in the voice storing exchange apparatus, the exchange system 1 determines whether the subscriber B is the registered specific subscriber. Even when the calling subscriber B belongs to another exchange system, a discrimination is still possible because the subscriber information can be transferred through a common signal line or ISDN D channel. On the other hand, a discrimination of a specific date and time can be made based on the calendar and clock included in the exchange system 1 or the voice storing exchange unit 2. Thus, only in case of the specific subscriber or specific date and time, is the connection switched in response to a transfer request.

The preferred embodiment of the present invention will be discussed below in detail, with reference to the accompanying drawings.

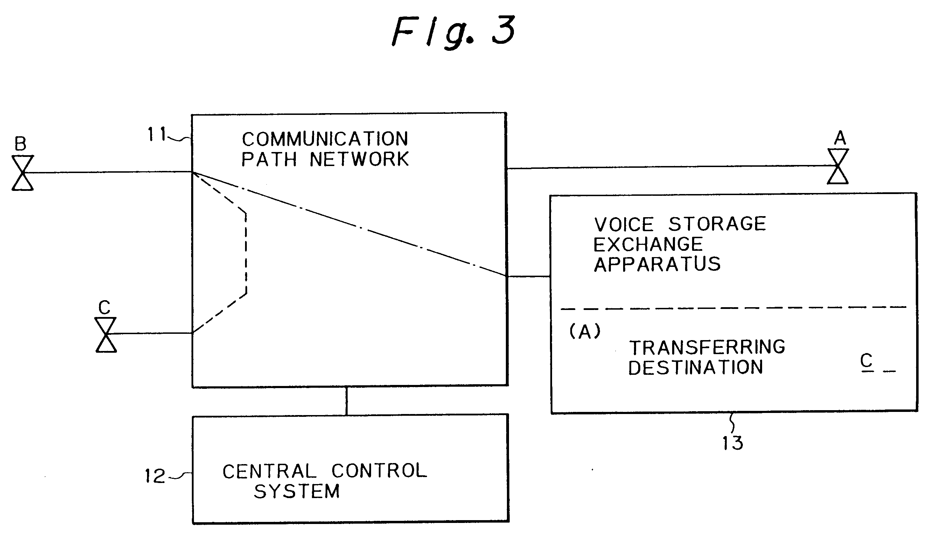

Figure 3 is a block diagram of the preferred embodiment of the invention, wherein 11 denotes a communication path network in an exchange system, 12 denotes a central control unit of the exchange system, and 13 denotes a voice storing exchange unit. When a subscriber A registers a message service request by a specific number, etc., the information is registered in a not shown memory as subscriber information, under the control of the central control unit 12. Then, a message storage area corresponding to the subscriber A is reserved in the voice storing exchange unit 13. In this case, it is possible to register the message including the transfer destination. Also, it is possible to use the messages set in the voice storing exchange unit 13.

In the present invention, it is possible to register not only the message service request but also a transfer destination, transfer conditions of, and so forth. When the subscriber A registers the transfer destination C, for example, it is registered in the control information area of the subscriber A in the voice storing exchange unit 13. On the other hand, to make it possible to transfer to a specific subscriber, the specific subscriber number, which is shorter than the dial number of the specific subscriber, can be registered. Furthermore, it is also possible to register the specific date and time, including a specific day of week, such as Saturday or Sunday, a specific day, such as the end of a month, or a specific time, such as after 5 p.m. to enable a transfer. In the alternative, it is possible to disable a transfer. Furthermore, the exchange system 1 or the voice storing exchange unit 13 is able to receive and identify number information of the calling subscriber while the calling subscriber is connected to the voice storing exchange unit 13, and can perform services, such as a message service, according to the number information received by the receiving function.

When the subscriber B makes a call to the subscriber A, the central control unit 12 of the exchange system 1 searches, based on the position information and telephone number information of the subscriber A, to discriminate whether the called subscriber A has registered for the message service request or not. When the subscriber A is identified as having registered, the chain line path is established to connect the calling subscriber B to the voice storing exchange unit 13 and actuate the latter without making a call to the subscriber A. The voice storing exchange unit 13 thus actuated sends the message to the subscriber B.

The subscriber B determines whether to record its message or to transfer its call, and enter a selection number, according to the massager stored in the voice storing exchange unit 13. When to record a message is selected, the voice storing exchange unit 13 is switched to the recording mode to store the message from the calling subscriber B. On the other hand, when to transfer the calling call is selected, the information on the transfer destination is fed from the voice storing exchange unit 13 to the central control unit 12, to thereby transfer the call from the calling subscriber B to the transfer destination designated by the calling subscriber B or to the transfer destination registered by the called subscriber A. The central control unit 12 thus switches the connection of the communication path network 11 to connect the calling subscriber B to the transfer destination C, for example, according to the information on the transfer destination.

At step S41, a call from the calling subscriber B is made to the called subscriber A who has designated that a received call be transferred to the voice storing exchange unit 13.

In this case, when a transfer is enabled only for a specific calling subscriber or on a specific date and time, when the calling subscriber B selects a transfer, it is determined whether the subscriber B is the registered specific subscriber and whether the timing is the registered specific date and time. When the designated conditions are satisfied, a transfer control is performed by switching the connection as set forth above.

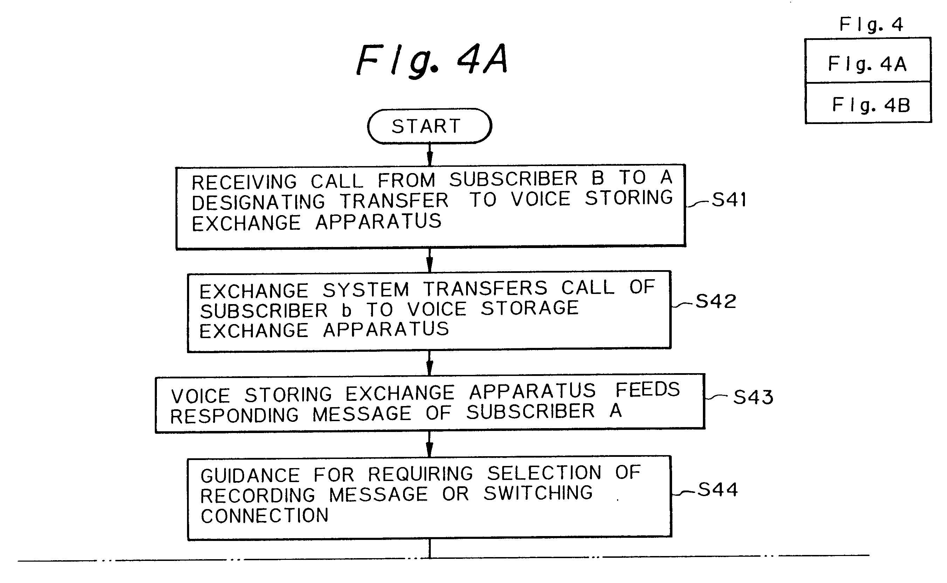

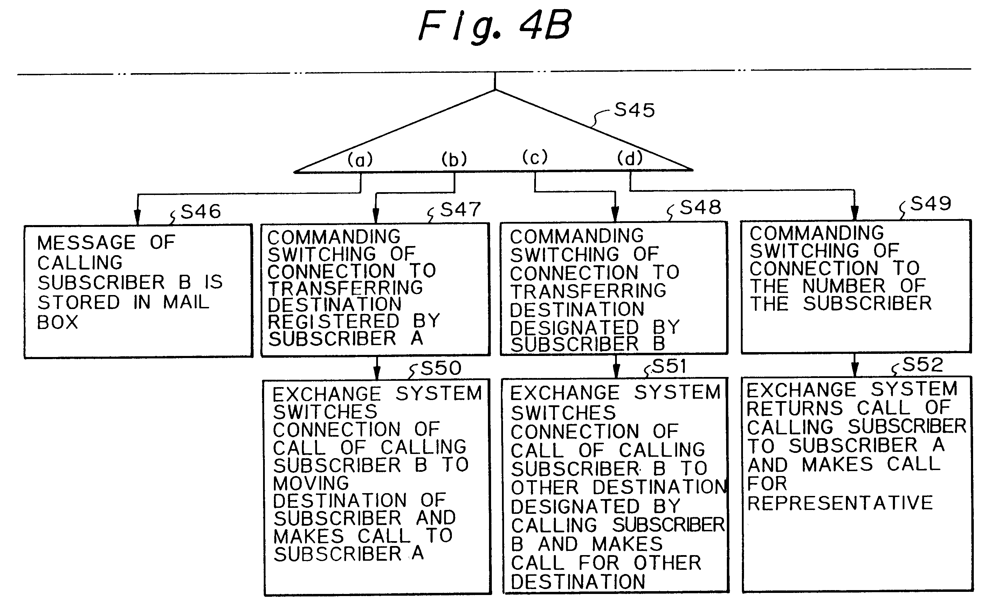

Figure 4 shows a general flowchart of the preferred embodiment of the invention. At step S41, a call from the calling subscriber B is mode to the called subscriber A who has designated that a received call be transferred to the voice storing exhange unit 13. At step S42, the exchange unit transfers the call from the calling subscriber B to the voice exchange storing unit 13. At step S43, the voice storing exchange unit 13 feeds a response message from the subscriber A when the subscriber A registered a message in advance. Then, at step S44 the voice storing exchange unit 13 sends, to the calling subscriber B, a guidance for selecting a recording of a message or a switch of the connection.

This guidance can be freely modified. For example, "Hello, this is ○○ speaking. I an now in a meeting room and will call you later. Please leave a message after the following sound Pi. (a)

If you are in a hurry, please enter □ and your call will be transferred to the meeting room. (b)

If you enter another destination number, then your call will be transferred to the designated destination. (c)

If you press △, then a colleague in the section will respond."

According to this guidance, at step S45, the subscriber B makes a selection of the input information. When the calling subscriber B selects the stored message (a), a message from the subscriber B is stored in the mail box of the subscriber A at step S46. Namely, the voice storing exchange unit 13 stores the message from the calling subscriber B in the area corresponding to the subscriber A.

On the other hand, when the calling subscriber B selects the condition (b) indicating a switching of the connection to the transfer the call to the destination designated by the called subscriber A, the transfer number registered by the subscriber A is read out and a connection switch is commanded at step S47 to make a connection to the moved destination C of the subscriber A at step S50, and a call thus is made to a terminal to which the subscriber A has moved. The exchange unit has switched the connection to the registered transfer destination. For instance, when the subscriber terminal C is a registered transfer destination a call is made to the subscriber terminal C.

When the calling subscriber B selects, at step S48, a switch of the connection (c) to another destination, the voice storing exchange unit 13 receives the destination number from the calling subscriber B and switches the connection to make a call at step S51.

On the other hand, when the calling subscriber B selects to switch the connection to a representative, the voice storing exchange unit 13 switches the connection to original terminal of the subscriber A through the exchange unit at step S49. The exchange system returns the call of the calling subscriber B from the voice storing exchange unit to the destination number designated by the calling subscriber B, to make a call to a representative at step S52.

As set forth above, when a transfer (b) or (c) to the transfer destination is selected, it is possible to add a step of discriminating whether the condition is to a registered specific subscriber or at a specified date and time. Also, it is possible to store more than one transfer destination, and the calling subscriber B makes a selection with respect to the guidance.

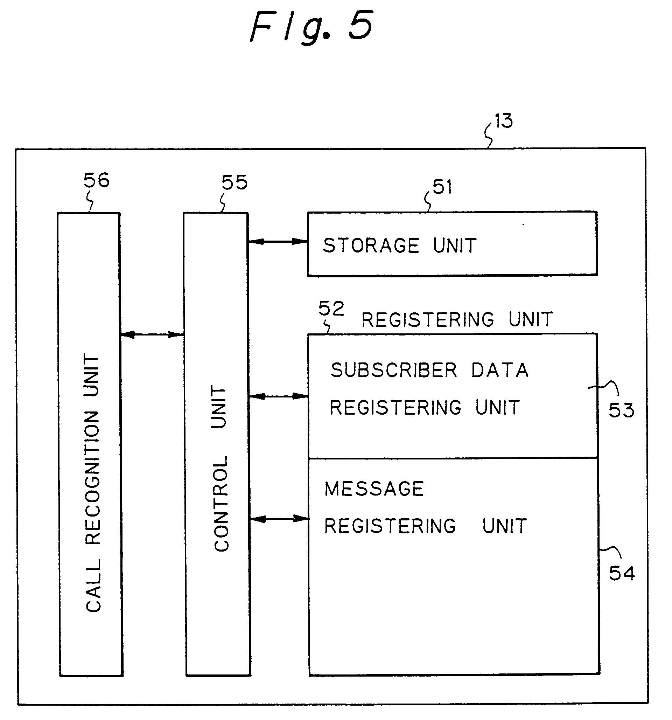

The embodiment of the present invention is further described with reference to Figs. 5 to 9.

Figure 5 show s the construction of the voice storing exchange unit 13. As shown in the figure, the voice storing exchange unit 13 includes a storing unit 51 for storing a program or data to execute the storing and exchange operation, a registering unit 52 which consists of a subscriber data registering unit 53 for registering subscriber numbers of subscribers which requiring the message and transfer service and a message registering unit 54 for registering messages from the subscribers which required the message and transfer service, a control unit 55 for controlling the storage operation and the switching operation, and a call recognition unit 56 for recognizing the calling subscriber and the called subscriber.

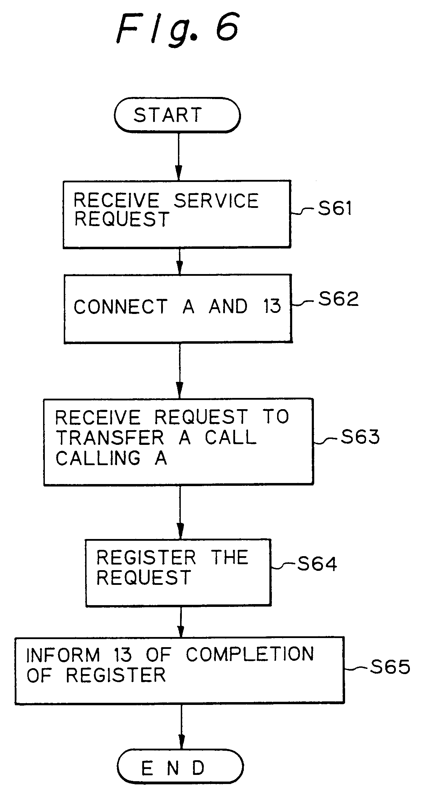

Figures. 6 to 9 are flowcharts explaining in detail the operations of the central control unit 12 and the voice storing exchange unit 13.

Figure. 6 shows the registration of the service request by the subscriber A, wherein at step S61, the central control unit receives the message service request from the subscriber A. To request a transfer of a call to the subscriber A to the voice storing exchange unit 13, the subscriber A dials a specific number or pushes a specific button to thereby register the message service request.

At step S62, when the specific number of the message service request registration is received, the central control unit12 connects the call from the subscriber A to the voice storing exchange unit 13, and simultaneously, informs the voice storing exchange unit 13 that the subscriber A has dialed the specific number of the message service request registration, the number of the subscriber A and so forth.

At step S63, the central control unit 12 receives a request from the voice storing exchange unit 13 requesting that a call to the subscriber A be transferred to the voice storing exchange unit 13.

At step S64, the central control unit 12 registers, to a memory (not shown), data of the subscriber A indicating that a call to the subscriber A be transferred to the voice storing exchange unit 13.

At step S65, the central control unit 12 informs the voice storing exchange unit 13 of the completion of the registration.

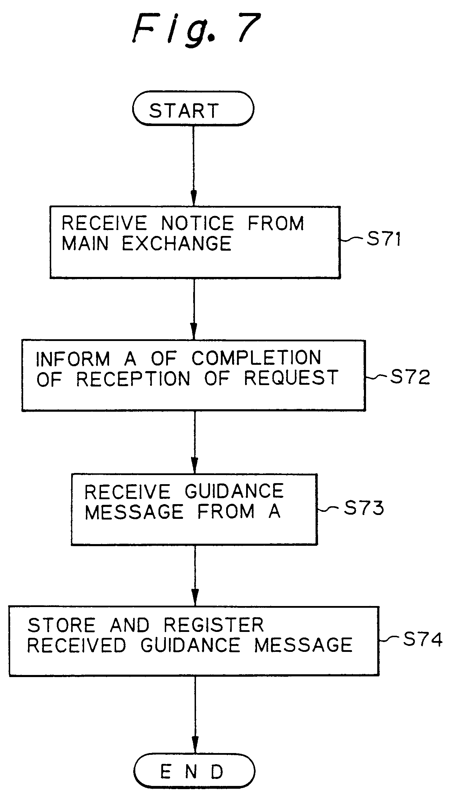

Figure. 7 explains the storing of a guideline to the voice storing exchange unit 13.

In Fig. 7, at step S71, the unit 13 receives notice that the subscriber A has dialed the specific number for registering the message service request, the number of the subscriber A and so forth, given by the central control unit 12 at step S62 in Fig. 6.

At step S72, the voice storing exchange unit 13 informs the subscriber A by a voice guidance, of the completion of the reception of the message service request registration.

At step S73, the unit 13 receives a guideline message from the subscriber A. The guideline includes a message for guidance to select one of responding messages when a call to the subscriber A is transferred to the voice storing exchange unit 13, and a condition selecting guideline for selecting a condition for executing a switching operation to connect the calling subscriber to the transfer destination of the subscriber A. An example of the guideline is as follows: "Your call has been received while I am absent. Please select one of the following response messages. ....".

It is of course possible for the subscriber A to record a personal response message.

At step S74, the voice storing exchange unit 13 registers, into the subscriber data registering unit 53 of the voice storing exchange unit 13, and stores the response messages recorded by the subscriber A in the message registering unit 54.

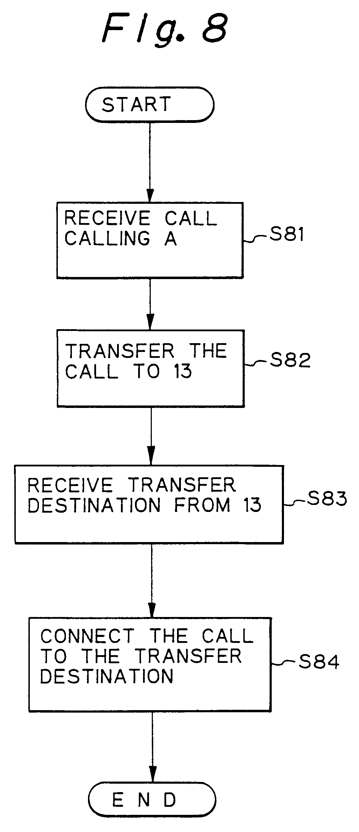

Figure. 8 is a flowchart explaining the operation of the central control unit 12 when a call to the subscriber A is received. In Fig. 8, at step S81, the central control unit 12 receives a call from the subscriber B to the subscriber A.

At step S82, the central control unit 12 transfers the call from the subscriber B to the voice storing exchange unit 13 in response to the request registered in the central control unit 12 at step S64 in Fig. 6. At this time, the central control unit 12 informs the voice storing exchange unit 13 that this transfer is in response to the message service request from the subscriber A, the number of the subscriber A, the type of call made by the subscriber B such as an extension line, a repeating line, an outside line, etc., and the number of the subscriber B if known.

At step S83, the central control unit 12 receives the number of a transfer destination from the voice storing exchange unit 13, and at step S84 the unit 12 connects the subscriber B to the transfer destination.

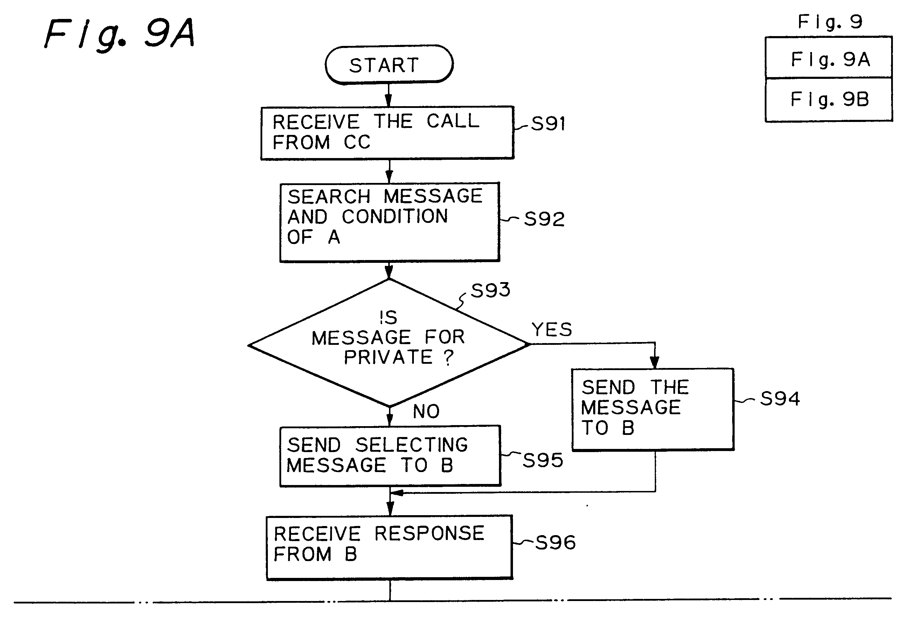

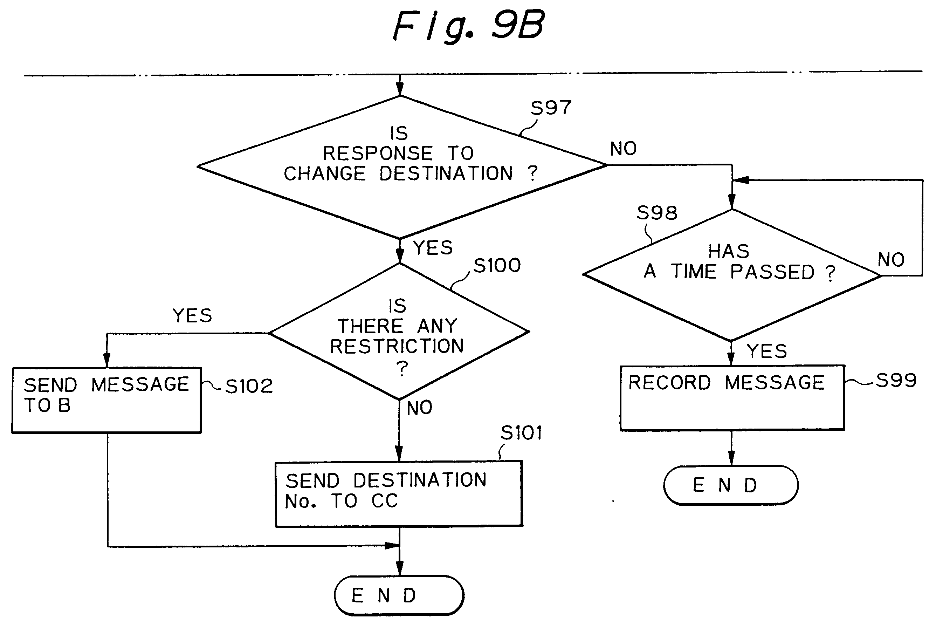

Figure 9 is a flowchart explaining the operation of the voice storing exchange unit 13 for sending the destination number to the central control unit 12, for recording the message from the subscriber B, for sending the message from the subscriber A to the subscriber B, and so forth.

In Fig. 9, at step S91, the unit 13 receives the call from the central control unit 12 which transferred the call at step S82 in Fig. 8, and at step S92, the unit 13 searches, using the number of the subscriber A as a key, the subscriber data registering unit 53 to find the guideline message provided by the subscriber A and stored at step S74 in Fig. 7. At step S93, it is determined whether or not the found message is private. If it is private, at step S94, the unit 13 sends the message to the calling subscriber B, and the process goes to step S96. If the message is not private, the message is a selecting message and at step S95, the unit 13 sends the selecting message to the calling subscriber B. At step S96, the unit 13 receives a response message from the subscriber B. At this time, the subscriber B selects to record a message from the subscriber B or to switch the connection. An example of the selecting message provided by the called subscriber A is "Hello, this is ○○ speaking. I am now in conference. If you are in a hurry, please dial XX. A representative will respond."

At step S97, it is determined whether the response from the called subscriber B is asking to change the destination. If there is no response from the called subscriber B for a predetermined time at step S98, then at step S99, the unit 13 sends a signal sound meaning the start of recording of a message from the called subscriber B. In response to the signal sound, the subscriber B sends a message which is then recorded in the message registering unit 54. At the same time, the voice storing exchange unit 13 also registers the information in the message such as the number of the subscriber B, the date and time the message was received, and so forth.

In the judgement at step S97, when the number entered by the called subscriber B is a code number indicating a switch of the connection to the destination registered by the subscriber A, then at step S100, the service condition registered by the subscriber A is acknowledged and it is determined whether or not there is any restriction on the switching of the connection to the destination, such as a specific date and time, a specific calling subscriber, and so forth. If there is no restriction, then at step S101, the unit 13 reads out the number of the destination for switching registered by the subscriber A, and send the destination number to the central control unit 12. The central control unit 12 then executes the switching operation to connect the subscriber B to the registered destination, for example, C.

When there is a restriction at step S100, then at step S102, the message registered by the subscriber A is sent to the subscriber B.

Although not shown in Fig. 9, it is possible that the number entered by the calling subscriber B means a code number indicating a switch of the connection to a destination designated by the calling subscriber B, plus a destination number. In this case, the unit 13 also reads out conditions in the message registered by the subscriber A, and if there is no restriction on switching the connection to the registered destination, the unit 13 instructs the central control unit 12 to switch the connection to the destination designated by the calling subscriber B.

It is also a possible that the number entered by the calling subscriber B means a code number indicating a switch of the connection to the original terminal of the called subscriber A. In this case also, the unit 13 reads out the condition in the message registered by the subscriber A, and if there is no restriction on switching the connection, the unit 13 instructs the central control unit 12 to switch the connection to the original terminal of the called subscriber A.

As discussed above, the present invention enables to a connection switch of a call connected to the voice storing exchange apparatus, for a transfer. In this case, a communication, such as a question and answer, is required, and it becomes possible to switch a connection without a re-dialing operation. Therefore, the service quality can be enhanced after a registration at the message transfer system.

**Claims**

1. A message service control system having a main exchange unit for connecting a calling subscriber terminal to a called subscriber terminal and a voice storing exchange unit for storing a message from the called subscriber, to thereby provide a service to said calling subscriber:

   said voice storing exchange unit having subscriber data registering means for registering a transfer destination address designated in advance by said called subscriber and message storing means for storing said message, said message including a guideline for the calling subscriber for selecting either to store a message from the calling subscriber or to be connected to said transfer destination address;

   whereby said main exchange unit connects said data registering means to said calling subscriber terminal when the calling subscriber calls the called subscriber; and

   in response to the information selected by the calling subscriber with reference to the guideline, said voice storing exchange unit stores a message from the calling subscriber or said main exchange unit connects the calling subscriber terminal to the transfer destination.

2. A message service control system as claimed in claim 1, wherein, when the calling subscriber calls the called subscriber, said main exchange unit connects, in response to a request provided in advance by the called subscriber, the calling subscriber terminal to the voice storing exchange unit; and in response to the information selected by the calling subscriber in response to the guideline, said voice storing exchange unit stores a message from the calling subscriber or sends the transfer destination address to the main exchange unit, said main exchange unit then performs a switching operation, when the transfer destination address is sent from the voice storing exchange unit, to connect the calling subscriber terminal to the transfer destination designated by the called subscriber.

3. A message service control system as set forth in claim 1, wherein said voice storing exchange unit comprises subscriber data registering means for registering said guideline, said guideline including the transfer destination and a specific subscriber designated in advance by said called subscriber, and said main exchange unit connects the calling subscriber terminal to the designated transfer destination only when the calling subscriber is the registered specific subscriber.

4. A message service control system as set forth in claim 1, wherein said voice storing exchange unit comprises subscriber data registering means for registering said guideline, said guideline including the transfer destination and a specific date and time designated in advance by said called subscriber, and main exchange unit connects the calling subscriber to the designated transfer destination only when the calling subscriber calls at the specific date and time.

5. A message service control system as set forth in claim 1, wherein said voice storing exchange unit comprises subscriber data registering means for registering said guideline, said guideline including the transfer destination, a specific subscriber and a specific date and time designated in advance by said called subscriber, and said main exchange unit connects the calling subscriber terminal to the designated transfer destination only when the calling subscriber is the designated specific subscriber and is calling at the specific date and time.

6. A message service control system as set forth in claim 1, wherein said main exchange unit comprises:
      connecting means for connecting said calling subscriber terminal to said voice storing exchange unit in response to a request from said called subscriber.

7. A message service control system for providing a service to a calling subscriber, comprising:
      means for storing a guideline message requiring a request for selecting one of a plurality of services registered by a called subscriber;
      means for sending the message to the calling subscriber when receiving a call to the called subscriber;
      means strage means for storing a message of the calling subscriber when receiving a first request from the calling subscriber in response to the guideline; and,
      means for connecting the calling subscriber to a transfer address when receiving a second request from the calling subscriber in response to the guideline.

8. A message service control method for providing a service to a calling subscriber, comprising the steps of:
      storing a guideline message requiring a request for selecting one of a plurality of services registered by a called subscriber;
      sending the message to the calling subscriber when receiving a call to the called subscriber;
      storing a message of the calling subscriber when receiving a first request from the calling subscriber in response to the guideline; and,
      connecting the calling subscriber to a transfer address when receiving a second request from the calling subscriber in response to the guideline.

9. A message service control method as set forth in claim 8, further comprising the steps of:
      registering a service request in a main exchange unit, said service request being provided by said called subscriber;
      informing a voice storing exchange unit of the completion of the registering of said service request in said main exchange unit; and

informing said first subscriber of the completion of the reception of the service request at said voice storing exchange unit.

# *Fig. 1*

21

EXCHANGE SYSTEM

B

A

①

④

③

②

C

VOICE STORAGE
EXCHANGE
APPARATUS

22

# Fig. 2

B

C

A

1

EXCHANGE
SYSTEM

TRANSFERRING
DESTINATION

A ➞ C

2

VOICE STORAGE
EXCHANGE
APPARATUS

EP 0 485 980 A2

# Fig. 3

COMMUNICATION
PATH NETWORK

11

B

C

A

VOICE STORAGE
EXCHANGE
APPARATUS

(A)
TRANSFERRING
DESTINATION          C

13

12    CENTRAL CONTROL
SYSTEM

EP 0 485 980 A2

# Fig. 4A

| Fig. 4 |
|---|
| Fig. 4A |
| Fig. 4B |

```
                    ( START )
                        │
                        ▼
┌──────────────────────────────────────────┐
│ RECEIVING CALL FROM SUBSCRIBER B TO A      │
│ DESIGNATING TRANSFER  TO VOICE STORING     │──S41
│ EXCHANGE APPARATUS                         │
└──────────────────────────────────────────┘
                        │
                        ▼
┌──────────────────────────────────────────┐
│ EXCHANGE SYSTEM TRANSFERS CALL OF          │
│ SUBSCRIBER b TO VOICE STORAGE              │──S42
│ EXCHANGE APPARATUS                         │
└──────────────────────────────────────────┘
                        │
                        ▼
┌──────────────────────────────────────────┐
│ VOICE STORING EXCHANGE APPARATUS FEEDS     │──S43
│ RESPONDING MESSAGE OF SUBSCRIBER A         │
└──────────────────────────────────────────┘
                        │
                        ▼
┌──────────────────────────────────────────┐
│ GUIDANCE FOR REQUIRING SELECTION OF        │
│ RECORDING MESSAGE OR SWITCHING             │──S44
│ CONNECTION                                 │
└──────────────────────────────────────────┘
```

EP 0 485 980 A2

# Fig. 4B

```
                              S45

        (a)        (b)        (c)        (d)

   ┌─────S46      ┌─────S47      ┌─────S48      ┌─────S49
   ▼              ▼              ▼              ▼
┌──────────┐  ┌──────────┐  ┌──────────┐  ┌──────────┐
│MESSAGE OF│  │COMMANDING│  │COMMANDING│  │COMMANDING│
│CALLING   │  │SWITCHING OF│ │SWITCHING OF││SWITCHING OF│
│SUBSCRIBER B IS││CONNECTION TO││CONNECTION TO││CONNECTION TO│
│STORED IN MAIL││TRANSFERRING││TRANSFERRING││THE NUMBER OF│
│BOX       │  │DESTINATION││DESTINATION││THE SUBSCRIBER│
│          │  │REGISTERED BY││DESIGNATED BY││          │
│          │  │SUBSCRIBER A││SUBSCRIBER B││          │
└──────────┘  └──────────┘  └──────────┘  └──────────┘
```

**S46** — MESSAGE OF CALLING SUBSCRIBER B IS STORED IN MAIL BOX

**S47** — COMMANDING SWITCHING OF CONNECTION TO TRANSFERRING DESTINATION REGISTERED BY SUBSCRIBER A

**S48** — COMMANDING SWITCHING OF CONNECTION TO TRANSFERRING DESTINATION DESIGNATED BY SUBSCRIBER B

**S49** — COMMANDING SWITCHING OF CONNECTION TO THE NUMBER OF THE SUBSCRIBER

**S50** — EXCHANGE SYSTEM SWITCHES CONNECTION OF CALL OF CALLING SUBSCRIBER B TO MOVING DESTINATION OF SUBSCRIBER AND MAKES CALL TO SUBSCRIBER A

**S51** — EXCHANGE SYSTEM SWITCHES CONNECTION OF CALL OF CALLING SUBSCRIBER B TO OTHER DESTINATION DESIGNATED BY CALLING SUBSCRIBER B AND MAKES CALL FOR OTHER DESTINATION

**S52** — EXCHANGE SYSTEM RETURNS CALL OF CALLING SUBSCRIBER TO SUBSCRIBER A AND MAKES CALL FOR REPRESENTATIVE

EP 0 485 980 A2

# $Fig.\ 5$

# Fig. 6

```
        ( START )
            │
            ▼
   ┌──────────────────┐
   │ RECEIVE  SERVICE │ ─── S61
   │ REQUEST          │
   └──────────────────┘
            │
            ▼
   ┌──────────────────┐
   │ CONNECT  A  AND 13│ ─── S62
   └──────────────────┘
            │
            ▼
   ┌──────────────────┐
   │ RECEIVE REQUEST TO│
   │ TRANSFER A CALL   │ ─── S63
   │ CALLING A         │
   └──────────────────┘
            │
            ▼
   ┌──────────────────┐
   │ REGISTER THE     │ ─── S64
   │ REQUEST          │
   └──────────────────┘
            │
            ▼
   ┌──────────────────────────┐
   │ INFORM 13 OF COMPLETION  │ ─── S65
   │ OF REGISTER              │
   └──────────────────────────┘
            │
            ▼
        ( END )
```

16

# Fig. 7

```
        ┌─────────────┐
        │   START     │
        └─────────────┘
               │
               ▼
    ┌─────────────────────────┐
    │ RECEIVE NOTICE FROM     │──── S71
    │ MAIN EXCHANGE           │
    └─────────────────────────┘
               │
               ▼
    ┌─────────────────────────┐
    │ INFORM A OF COMPLETION  │──── S72
    │ OF RECEPTION OF REQUEST │
    └─────────────────────────┘
               │
               ▼
    ┌─────────────────────────┐
    │ RECEIVE GUIDANCE        │──── S73
    │ MESSAGE FROM A          │
    └─────────────────────────┘
               │
               ▼
    ┌─────────────────────────┐
    │ STORE AND REGISTER      │──── S74
    │ RECEIVED GUIDANCE MESSAGE│
    └─────────────────────────┘
               │
               ▼
        ┌─────────────┐
        │   E N D     │
        └─────────────┘
```

# Fig. 8

```
        ( START )
             │
             ▼
   ┌──────────────────┐
   │ RECEIVE  CALL    │── S81
   │ CALLING  A       │
   └──────────────────┘
             │
             ▼
   ┌──────────────────┐
   │ TRANSFER  THE    │── S82
   │ CALL  TO  13     │
   └──────────────────┘
             │
             ▼
   ┌──────────────────┐
   │ RECEIVE  TRANSFER│── S83
   │ DESTINATION FROM 13│
   └──────────────────┘
             │
             ▼
   ┌──────────────────┐
   │ CONNECT  THE CALL│
   │ TO  THE  TRANSFER│── S84
   │ DESTINATION      │
   └──────────────────┘
             │
             ▼
        ( E N D )
```

# Fig. 9A

Fig. 9

| Fig. 9A |
|---|
| Fig. 9B |

```
        START
          |
          v
RECEIVE THE CALL      —S91
FROM CC
          |
          v
SEARCH MESSAGE
AND CONDITION         —S92
OF A
          |
          v
         S93
        /    \
       /  IS   \   YES
      < MESSAGE FOR >------>  SEND THE     —S94
       \ PRIVATE? /          MESSAGE
        \        /           TO B
          | NO                 |
          v                    |
SEND SELECTING      —S95       |
MESSAGE TO B                   |
          |                    |
          v<-------------------+
RECEIVE RESPONSE    —S96
FROM B
```

EP 0 485 980 A2

# Fig. 9B

EP 0 485 980 A2